# EUROPÄISCHE PATENTSCHRIFT

(11) **EP 1 134 132 B1**
(45) Veröffentlichungstag und Bekanntmachung des Hinweises auf die Patenterteilung: **25.08.2004**
(21) Anmeldenummer: 01105827.8
(22) Anmeldetag: 08.03.2001
(51) Int. Cl.: B60R 21/34, F16P 3/12

(54) **Akustisches Warnsystem für eine mobile Arbeitsmaschine**
Acoustic warning system for a mobile working machine
Système d'avertisseur acoustique pour une machine de travail mobile

(30) Priorität: 15.03.2000 DE 10012527
(43) Veröffentlichungstag der Anmeldung: 19.09.2001
(73) Patentinhaber: STILL GMBH, D-22113 Hamburg (DE)
(72) Erfinder: Bavendiek, Rainer, Dr., 21465 Wentorf (DE); Arand, Patrick, Dipl.-Ing., 22397 Hamburg (DE); Frisch, Bert, 21502 Gessthacht (DE); Stock, Christian, 21435 Stelle (DE)
(74) Vertreter: Kasseckert, Rainer

(56) Entgegenhaltungen:
- DE-A- 3 837 054
- DE-A- 19 734 143

## Beschreibung

Die Erfindung betrifft eine mobile Arbeitsmaschine, insbesondere Flurförderzeug, mit einem akustischen Warnsystem, wobei mit einem akustischen Signalgeber ein in der Umgebung der Arbeitsmaschine wahrnehmbarer Warnton erzeugbar ist.

Akustische Warnsysteme werden in mobilen Arbeitsmaschinen eingesetzt, um Personen und gegebenenfalls auch Tiere, die sich in der Umgebung der Arbeitsmaschine befinden, warnen zu können. Üblicherweise werden hierbei Hupen verwendet, die einen lauten Warnton oder einen Mehrklang erzeugen können. Der Signalton wird in der Regel von der Bedienperson mittels eines Bedienelements bei Bedarf manuell ausgelöst.

Bei bekannten Wamsystemen des Standes der Technik wirkt das Hupensignal auf Personen erschreckend und lähmend. Häufig ist zu beobachten, daß die gewarnte Person nicht in der gewünschten Weise reagiert und z.B. auf dem Fahrweg der Arbeitsmaschine verharrt. Eine erschreckte Person reagiert häufig in nicht rationeller Weise und gefährdet sich dabei häufig selbst. Ein weiterer Nachteil von bekannten Wamsystemen liegt darin, daß der Warnton nicht an die Umgebung der Arbeitsmaschine angepaßt werden kann. In Abhängigkeit von der Lautstärke und dem Frequenzbereich der Umgebungsgeräusche ist es daher möglich, daß der selbe Wamton in einem Fall nur schwer wahrnehmbar ist, in einem anderen Fall jedoch als übermäßig aggressiv empfunden wird.

Aus der gattungsbildenden DE 38 37 054 A1 ist ein automatisches Warnsystem für ein Flurförderzeug bekannt, bei dem ein herkömmlicher akustischer Signalgeber, beispielsweise ein Summer oder eine Hupe, aktiviert wird, wenn ein Sensor in der Umgebung des Flurförderzeugs einen Gegenstand oder eine Person erfasst. Die Druckschrift DE 197 34 143 A1 offenbart ein Informationssystem für mit einem Kopfhörer ausgerüstete Personen, bei dem in dem Kopfhörer verschiedene Sprachnachrichten gespeichert sind, deren Wiedergabe von einer zentralen Stelle über Funk ausgelöst werden kann.

Der Erfindung liegt daher die Aufgabe zugrunde, eine mobile Arbeitsmaschine mit einem Warnsystem zur Verfügung zu stellen, mit dem jederzeit ein gut wahrnehmbarer, jedoch nicht erschreckender Warnton erzeugbar ist.

Diese Aufgabe wird erfindungsgemäß dadurch gelöst, daß das akustische Warnsystem ein Mittel zum Speichern und Wiedergeben mindestens eines analogen und/oder digitalen Tonsignals aufweist. Es kann somit mindestens ein Tonsignal gespeichert werden, wobei als Speichermedium vorzugsweise magnetische Datenträger (z.B. Diskette, Magnetband) oder elektronische Datenträger (z.B. Speicherchip) verwendet werden können. Die Speicherung des Tonsignals kann in analoger Form oder in digitalisierter Form erfolgen. Insbesondere bei Speicherung in digitaler Form kann auf gebräuchliche standardisierte Formate (z.B. WAV, MP3) zurückgegriffen werden.

Vorteilhafterweise ist der Signalgeber als Lautsprecher ausgeführt und steht mit dem Mittel zum Speichern und Wiedergeben mindestens eines analogen und/oder digitalen Tonsignals in Wirkverbindung. Ein Lautsprecher ermöglicht im Gegensatz zu den bisher gebräuchlichen Hupen die Wiedergabe von beliebigen Klängen und Tonfolgen.

Mit besonderem Vorteil ist die Wiedergabelautstärke des Tonsignals einstellbar. Die Lautstärke kann dabei auf einen festen Wert voreingestellt werden. Möglich ist es jedoch auch, die Wiedergabelautstärke des Tonsignals automatisch an die Umgebungslautstärke und/oder an die aktuelle Fahrgeschwindigkeit der Arbeitsmaschine anzupassen.

Wenn das Mittel zum Speichern und Wiedergeben mindestens eines analogen und/oder digitalen Tonsignals eine analoge Eingangsschnittstelle aufweist, kann beispielsweise mittels eines Mikrofons eine menschliche Stimme als Tonsignal aufgenommen werden. Ebenso ist es möglich, das Tonsignal von einem analogen Tonträger, z.B. einer Musikkassette, zu überspielen.

Zweckmäßig ist es ebenfalls, wenn das Mittel zum Speichern und Wiedergeben mindestens eines analogen und/oder digitalen Tonsignals eine digitale Eingangsschnittstelle aufweist. Über diese digitale Schnittstelle können in digitaler Form gespeicherte Tonsignale, z.B. in Form von Dateien, von einem Personalcomputer auf das erfindungsgemäße Mittel zum Speichern und Wiedergeben eines analogen und/oder digitalen Tonsignals übertragen werden.

Ein Einsatz des erfindungsgemäßen akustischen Wamsystems anstelle einer Hupe wird ermöglicht, wenn das Mittel zum Speichern und Wiedergeben mindestens eines analogen und/oder digitalen Tonsignals mit einem manuellen Bedienelement in Wirkverbindung steht, derart, daß bei Betätigung des Bedienelements das gespeicherte Tonsignal wiedergegeben wird. Als manuelles Bedienelement kann beispielsweise ein mit dem Finger betätigbarer Taster vorgesehen sein.

Gemäß einer erweiterten Ausführung steht das Mittel zum Speichern und Wiedergeben mindestens eines analogen und/oder digitalen Tonsignals mit einer Sensoreinrichtung, vorzugsweise einem Lebewesenerkennungssensor, in Wirkverbindung, derart, daß in Abhängigkeit von dem Ausgangssignal der Sensoreinrichtung das gespeicherte Tonsignal wiedergegeben wird. Als Lebewesenerkennungssensor kann beispielsweise ein Infrarotsensor oder ein Ultraschallsensor verwendet werden. Das Tonsignal ertönt automatisch, wenn ein Lebewesen in der gefährdeten Umgebung der Arbeitsmaschine erkannt wird.

Das erfindungsgemäße Warnsystem ermöglicht es, das bisher übliche Hupensignal durch ein angenehmeres Tonsignal zu ersetzen, das eine vergleichbare Lautstärke besitzen kann. Als wohlklingende Tonsignale kommen beispielsweise synthetisch erzeugte Klänge, Melodien, Tierstimmen oder von Menschen gesprochene Worte in Betracht. Ermöglicht wird ebenfalls eine Anpassung des Tonsignals an die Geräuschkulisse in der Umgebung der Arbeitsmaschine, wobei ein von dieser Geräuschkulisse klar unterscheidbares Tonsignal gewählt werden sollte. Die Realisierung erfolgt mittels eines analogen oder digitalen Aufzeichnungsgerätes, mit dem das gewünschte Tonsignal gespeichert werden kann. Das Warnsystem kann hierbei für den Benutzer frei programmierbar gestaltet werden, so daß er selbst beliebige Tonsignale speichern kann. Herstellerseitig können auch bestimmte vorgegebene Tonsignale gespeichert werden, die von dem Benutzer dann ausgewählt werden können.

## Patentansprüche

1. Mobile Arbeitsmaschine, insbesondere Flurförderzeug, mit einem akustischen Warnsystem, wobei mit einem akustischen Signalgeber ein in der Umgebung der Arbeitsmaschine wahrnehmbarer Warnton erzeugbar ist, **dadurch gekennzeichnet, daß** das akustische Warnsystem ein Mittel zum Speichern und Wiedergeben mindestens eines analogen und/oder digitalen Tonsignals aufweist.

2. Mobile Arbeitsmaschine nach Anspruch 1, **dadurch gekennzeichnet, daß** der Signalgeber als Lautsprecher ausgeführt ist und mit dem Mittel zum Speichern und Wiedergeben mindestens eines analogen und/oder digitalen Tonsignals in Wirkverbindung steht.

3. Mobile Arbeitsmaschine nach Anspruch 1 oder 2, **dadurch gekennzeichnet, daß** die Wiedergabelautstärke des Tonsignals einstellbar ist.

4. Mobile Arbeitsmaschine nach einem der Ansprüche 1 bis 3, **dadurch gekennzeichnet, daß** das Mittel zum Speichern und Wiedergeben mindestens eines analogen und/oder digitalen Tonsignals eine analoge Eingangsschnittstelle aufweist.

5. Mobile Arbeitsmaschine nach einem der Ansprüche 1 bis 4, **dadurch gekennzeichnet, daß** das Mittel zum Speichern und Wiedergeben mindestens eines analogen und/oder digitalen Tonsignals eine digitale Eingangsschnittstelle aufweist.

6. Mobile Arbeitsmaschine nach einem der Ansprüche 1 bis 5, **dadurch gekennzeichnet, daß** das Mittel zum Speichern und Wiedergeben mindestens eines analogen und/oder digitalen Tonsignals mit einem manuellen Bedienelement in Wirkverbindung steht, derart, daß bei Betätigung des Bedienelements das gespeicherte Tonsignal wiedergegeben wird.

7. Mobile Arbeitsmaschine nach einem der Ansprüche 1 bis 6, **dadurch gekennzeichnet, daß** das Mittel zum Speichern und Wiedergeben mindestens eines analogen und/oder digitalen Tonsignals mit einer Sensoreinrichtung, vorzugsweise einem Lebewesenerkennungssensor, in Wirkverbindung steht, derart, daß in Abhängigkeit von dem Ausgangssignal der Sensoreinrichtung das gespeicherte Tonsignal wiedergegeben wird.

## Claims

1. Mobile working machine, in particular industrial truck, having an acoustic warning system, it being possible for a warning sound that can be perceived in the surroundings of the working machine to be generated by an acoustic signal generator, **characterized in that** the acoustic warning system has a means of storing and reproducing at least one analogue and/or digital sound signal.

2. Mobile working machine according to Claim 1, **characterized in that** the signal generator is designed as a loudspeaker and is operatively connected to the means of storing and reproducing at least one analogue and/or digital sound signal.

3. Mobile working machine according to Claim 1 or 2, **characterized in that** the loudness of the reproduction of the sound signal can be adjusted.

4. Mobile working machine according to one of Claims 1 to 3, **characterized in that** the means of storing and reproducing at least one analogue and/or digital sound signal has an analogue input interface.

5. Mobile working machine according to one of Claims 1 to 4, **characterized in that** the means of storing and reproducing at least one analogue and/or digital sound signal has a digital input interface.

6. Mobile working machine according to one of Claims 1 to 5, **characterized in that** the means of storing and reproducing at least one analogue and/or digital sound signal is operatively connected to a manual operating element in such a way that the stored sound signal is reproduced when the operating element is actuated.

7. Mobile working machine according to one of Claims 1 to 6, **characterized in that** the means of storing and reproducing at least one analogue and/or digital sound signal is operatively connected to a sensor device, preferably a living being detection sensor, in such a way that the stored sound signal is reproduced on the basis of the output signal from the sensor device.

## Revendications

1. Machine de travail mobile, notamment chariot de manutention, comprenant un système d'avertisseur acoustique, une sonnerie d'alarme perceptible dans l'environnement de la machine de travail pouvant. être produite avec un générateur de signaux acoustiques, **caractérisée en ce que** le système d'avertisseur acoustique présente un moyen pour mémoriser et restituer au moins un signal audio analogique et/ou numérique.

2. Machine de travail mobile selon la revendication 1, **caractérisée en ce que** le générateur dé signaux est réalisé sous forme de haut-parleur et est en liaison coopérante avec le moyen pour mémoriser et restituer au moins un signal audio analogique et/ou numérique.

3. Machine de travail mobile selon la revendication 1 ou 2, **caractérisée en ce que** le volume sonore de restitution du signal audio peut être ajusté.

4. Machine de travail mobile selon l'une quelconque des revendications 1 à 3, **caractérisée en ce que** le moyen pour mémoriser et restituer au moins un signal audio analogique et/ou numérique présente une interface d'entrée analogique.

5. Machine de travail mobile selon l'une quelconque des revendications 1 à 4, **caractérisée en ce que** le moyen pour mémoriser et restituer au moins un signal audio analogique et/ou numérique présente une interface d'entrée numérique.

6. Machine de travail mobile selon l'une quelconque des revendications 1 à 5, **caractérisée en ce que** le moyen pour mémoriser et restituer au moins un signal audio analogique et/ou numérique est en liaison coopérante avec un élément de commande manuel de telle sorte que lors de l'actionnement de l'élément de commande, le signal audio mémorisé soit restitué.

7. Machine de travail mobile selon l'une quelconque des revendications 1 à 6, **caractérisée en ce que** le moyen pour mémoriser et restituer au moins un signal audio analogique et/ou numérique est en liaison coopérante avec un dispositif de détection, de préférence un capteur de reconnaissance d'êtres vivants, de telle sorte qu'en fonction du signal de sortie du dispositif de détection, le signal audio mémorisé soit restitué.
